Europäisches Patentamt

(19) European Patent Office

Office européen des brevets

(11) Publication number: 0 207 237
A1

(12) **EUROPEAN PATENT APPLICATION**

(21) Application number: 86105201.7

(22) Date of filing: 15.04.86

(51) Int. Cl.⁴: G 11 B 23/023

(30) Priority: 19.06.85 US 746613

(43) Date of publication of application:
07.01.87 Bulletin 87/2

(84) Designated Contracting States:
CH DE FR GB IT LI NL

(71) Applicant: WRIGHT LINE INC.
160 Gold Star Boulevard
Worcester, MA 01606(US)

(72) Inventor: Brosnan, Dennis
RFD No. 2, Box 564 Valley Drive
Worcester MA 01550(US)

(74) Representative: Patentanwälte Grünecker, Kinkeldey,
Stockmair & Partner
Maximilianstrasse 58
D-8000 München 22(DE)

(54) System for storing, transporting and dispensing magnetic tape cartridges.

(57) A system for the storing, transporting and dispensing of magnetic tape cartridges includes an open-topped, four walled tray (10) having a plurality of integrally formed handles (28), a staging rack for supporting the tray on a work surface or equipment cabinet top, and a mobile truck.

FIG. 1

Croydon Printing Company Ltd.

## SYSTEM FOR STORING, TRANSPORTING
## AND DISPENSING MAGNETIC TAPE
## CARTRIDGES

## DESCRIPTION

### Field of the Invention

This invention relates to a system for storing, transporting and dispensing of information media in general, and more specifically to a system for storing, transporting and dispensing magnetic tape cartridges.

### Background of the Invention

For years the accepted state-of-the-art means for supplying digital magnetic tape to data processors and other users was the familiar 10 1/2 inch reel of ferric oxide magnetic tape. The development of the IBM 3480 Magnetic Tape Subsystem which utilizes a recording medium of chromium-dioxide magnetic particles on tape contained within compact, easy to handle cartridges, is rapidly making the 10 1/2 inch tape reels obsolete. Not only is the chromium-dioxide magnetic tape technologically better than ferric oxide tape, but being stored in specially designed cartridges which are about 4 inches by 5 inches in size compared with the 10 1/2 inch reels has resulted in substantial space saving to users.

Libraries for tape cartridges are available in the form of conventional stationary pigeon hole stacks into which individual cartridges are slid and then removed for usage. Portable carts with pigeon holes are also available to transport a number of cartridges from the stacks to the data processing equipment.

Improved library systems were disclosed in Patent Applications, Serial No. 729,364, filed on May 1, 1985, and Serial No. 739,976 filed on May 31, 1985, both entitled "System for Storing and Dispensing Magnetic Tape Cartridges" and commonly owned by the assignee of this invention. In both, the library includes a plurality of pivotally mounted storage cells, each one designed to receive a magnetic tape cartridge. While it is anticipated that many will use the improved library for archival storage only, it is nonetheless designed for ease in access and dispensing and to accommodate active and interactive use on a regular basis by librarians and other users. As such, it became apparent that a system was desirable for handling the magnetic tape cartridges after their selective removal from the library.

It is an object of the present invention to provide an integrated system for handling magnetic tape cartridges as work in process, for storing and transporting magnetic tape cartridges between the library and the data processing equipment and for storing and dispensing magnetic tape cartridges at the data processing equipment location.

It is another object of this invention to provide a system for efficiently retrieving, transporting and processing magnetic tape cartridges when not stored in the library, which is not only space economical, but also proffers ease in use and so is time economical for the computer user.

Summary of the Invention

The invention resides in a system for storing, transporting and dispensing magnetic tape cartridges. It includes a tray for receiving the cartridges. The tray is an open-topped, four walled receptacle having integrally formed handles, feet, dividers, stacking ribs, and spacer bar.

The system also includes a staging rack for supporting the tray on the top of data processing equipment or other support surface. The tray is supported for dispensing of the cartridges and preferably inclines at an angle of presentation of the cartridges of approximately $100^{\circ}$ to $120^{\circ}$ from the horizontal. According to the preferred embodiment, the staging rack includes openings for receiving the feet of the tray so that the tray can be positively positioned. This arrangement can serve to balance and stabilize the tray on the staging racks as well as prevent accidental removal or falling of the tray.

The system can include, according to a further embodiment, a mobile truck for transportation of several trays at a time.

The above and other features of the invention including various novel details of construction and combinations of parts will now be more particularly described with reference to the accompanying drawings and pointed out in the claims. It will be understood that the particular system for storing, transporting and dispensing a magnetic tape cartridge is shown by way of illustration only and not as a limitation of the invention. The principles and features of this invention may be employed in varied and numerous embodiments without departing from the scope of the invention.

Brief description of the Drawings

Fig. 1 is a perspective view of a tray for storing, transporting and dispensing magnetic tape cartridges in accordance with the invention;

Fig. 1A is a partial view in section of the interior of walls 14 and 14A of two of the trays, stacked one upon the other;

Fig. 1B is a top plan view of the tray shown in Fig. 1;

Fig. 2 is a perspective view of a staging rack for supporting the tray;

Fig. 3A is a plan view of a template for positioning the staging rack;

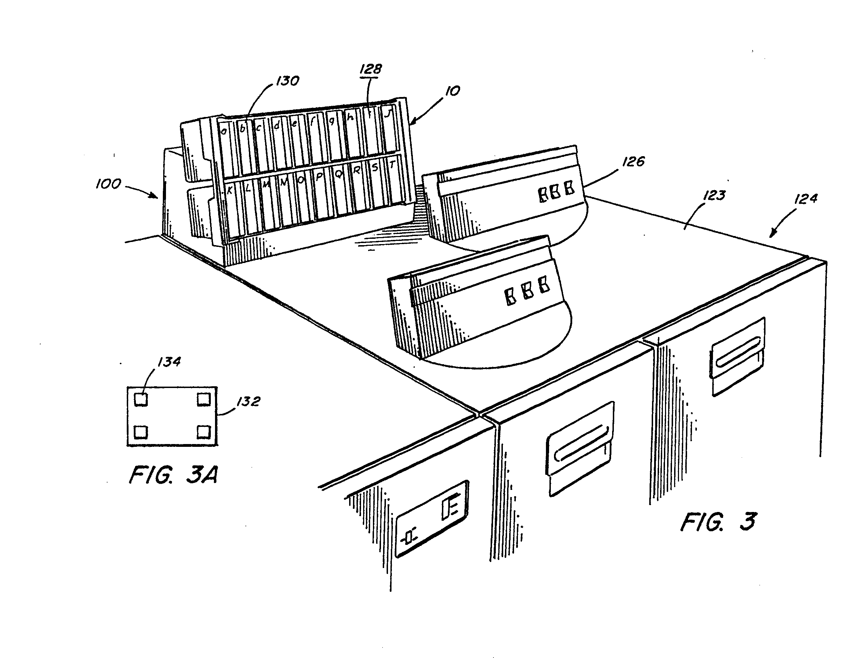

Fig. 3 is an illustrative view of the tray loaded with magnetic tape cartridges and supported by a staging rack on data processing equipment; and

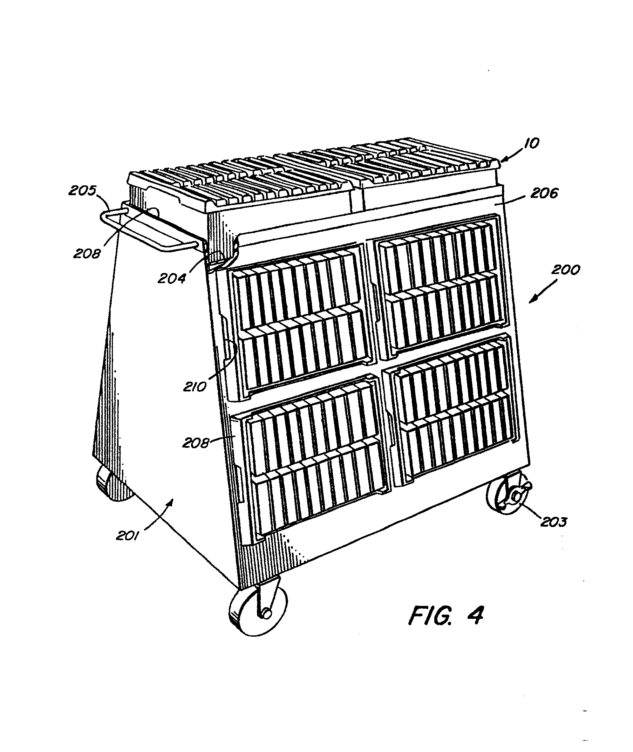

Fig. 4 is a perspective view of a mobile truck for transporting a plurality of the trays.

Detailed Description of the Preferred Embodiment

In the following detailed description of the invention, reference numbers designate like features shown in the drawings.

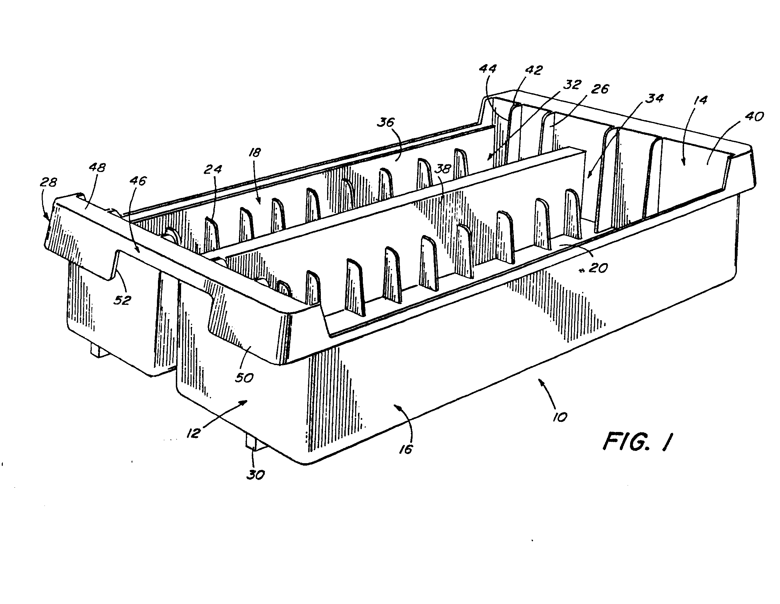

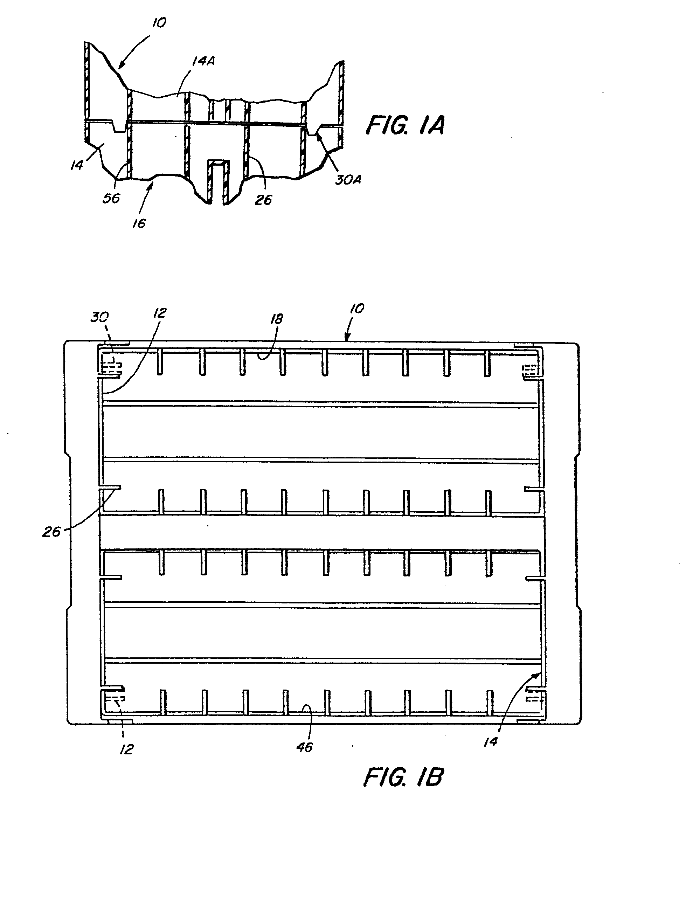

In Fig. 1 there will be seen a tray or caddy 10 made in accordance with the present invention. The tray 10 is of an open-topped box construction having substantially planar walls 12, 14, 16 and 18 with substantially planar bottom 20 bridging between them. Walls 12 and 14 are in spaced substantially parallel relation, one to another, as are walls 16 and 18 which extend generally orthogonally to and connect walls 12 and 14 at their respective ends.

The tray 10 further includes a spacer 22, dividers 24 stacking ribs 26, handles 28 and feet 30 which shall now be described in greater detail.

The spacer bar 22 extends the length of the tray 10, between walls 12 and 14, and in spaced, generally, parallel relation to walls 16 and 18. The spacer bar 22 extends vertically upward from the bottom 20 to a predetermined height, selected to be less than the height of a magnetic tape cartridge (not shown in this figure). The spacer bar 22 separates the tray 10 into two channels or compartments 32, 34 for the receipt of cartridges. By this arrangement two rows of cartridges standing on their ends can be accommodated in the tray 10 between walls 16 and 18 and the spacer bar 22. On each interior surface 36 of walls 16 and 18 and on each side surface 38 of spacer bar 22 are disposed dividers 24 of a planar configuration which vertically extend from the bottom 20, are edgewise connected to their respective interior or side surface 36 or 38 and project toward the center of the respective compartment 32 or 34. Each of the dividers 24 along the spacer bar 22 is in lateral alignment with a divider along the opposing interior surface 36 such that a line connecting each such aligned pair would be substantially parallel to walls 12 and 14.

Since the magnetic tape cartridges are received within compartments 32 and 34 between dividers 24, the size and configuration of the interior space is determinable. Each of the compartments 32 and 34 have a lateral width (measured between the respective interior surface 36 and side surface 38) corresponding to the width of a cartridge. Likewise, the distance between adjacent dividers 24 must accommodate the thickness of a cartridge.

Preferably, the tray 10 includes feet 30, one in each corner of the bottom 20 near where the walls 12 and 14 meet and join with walls 16 and 18. The feet 30 are projections which extend vertically downward from the bottom 20 to which they connect.

Stackability of the tray 10 on or under another similarly constructed tray is promoted and enhanced by means of stacking ribs 26 which, vertically extend upward from and are edgewise connected to the bottom 20. The stacking ribs 26 are likewise connected edgewise to walls 12 and 14 along interior surface 40 thereof. The stacking ribs 26 have a top shoulder 42 which is configured to bear the weight of any trays stacked on the tray 10. This is accomplished by having the distance between the shoulders 42 of wall 12 and those of wall 14 equal to, if not less than, the length of the bottom 20. In this way a tray 10 can be stacked upon another with the bottom of the top tray resting on the shoulders 42 of the bottom tray.

0207237

In accordance with the invention, the tray 10 is designed to include lateral and transverse (or lengthwise) stops to promote and enhance stability during stacking. As shown, this is accomplished by the cooperation of the feet 30 and stacking ribs 26. This can best be understood with reference to Fig. 1A which shows a partial view of two stacked trays, and Fig. 1B which is a top view of the tray 10 showing the position of feet 30 relative to walls 12 and 14 and stacking ribs 26.

As shown in Fig. 1A, when stacked, the feet 30A of a tray 10A are disposed adjacent the wall 14 and one of the stacking ribs 26 of the tray 10. This is achieved by dimensioning the trays appropriately. As should be readily apparent, the distance between feet 30A along wall 14A is just sufficient to receive two spaced stacking ribs 26 therebetween with a close fit when tray 10A is placed on tray 10. The feet 30A are disposable adjacent sides 56 of the stacking ribs 26. In fact, it is preferable to have the feet 30A disposable in the sides 56 of the stacking ribs closest to walls 16 and 18 so that the tray 10 is effectively disposable between the feet 30A. (At least the stacking ribs 26 fall between or are even clamped by the feet 30A on their opposing or inner surfaces.)

Perhaps additional reference to Fig. 1B will further clarify the stacking features. Remember, however, that this figure only is a top plan view - it does not depict stacked trays. Nonetheless the relative positioning of the parts of the tray 10 as can be seen in this drawing should assist the reader in appreciating the invention. The outside distance between each of the feet 30 along wall 12 to its counterpart across the length of the tray 10 along wall 14 is just sufficient to permit them to fall, when tray 10 is placed atop another as in Fig. 1A, within said other tray and in close proximity to the walls of the other tray corresponding to walls 12 and 14, if not in actual contact therewith. In fact it might be preferable to have a slight interference fit so that the feet grip the inside surfaces of the other trays walls corresponding to walls 12 and 14, when stacked. Thus, the feet 30A coact with the associated ones of the stacking ribs 26 so as to provide lateral stops, while the feet 30A also coact with the associate one of walls 12 or 14 to provide transverse stops. The lateral and transverse stops promote and enhance column stability of stacked trays.

Returning to Fig. 1, facilitated insertion of magnetic tape cartridges into tray 10 can be accomplished by tapering the stacking ribs 26 along their distal edge 44 toward the associated one of walls 12 or 14 (to which the stacking ribs 26 are attached) near the shoulder 42, and by limiting the height of the dividers 24. This permits the cartridges to find their appropriate location without requiring careful alignment.

Facilitated removal, as during dispensing, is also obtained by the expediences just mentioned as well as by limiting the spacer bar 22 to a height less than that of the cartridges. The height of the walls 16 and 18 can also be so limited, if desired.

For ease in manual transportation of the tray handles 28 are provided, one along each wall 12 and 14. According to the invention, each of the handles 28 is of a specifically contoured design including a narrowed gripping portion 46 bounded by a top horizontal portion 48 extending along the associate one of walls 12 or 14 to which it is connected, and away from the interior of the tray 10, a wall portion 50 which extends around the top horizontal portion 48 to which it is edgewise connected and from which it descends vertically and at right angles thereto so as to have a generally squared-off "C" shaped cross-section, and a cutout 52 in the distal end of the wall portion 50 approximately midway along its lateral width, and of a sufficient lateral width itself to comfortably receive a persons hand.

The tray 10 as heretofore described can be integrally molded of a plastic material and of a one-piece construction so as to require no assembly steps in fabrication, while providing a durable, heavy duty receptacle for transporting magnetic tape cartridges. The dividers 24, stacking ribs 26 and handles 28 act to strengthen the tray 10, rendering it more rigid even while transporting a full load of magnetic tape cartridges.

The tray 10 can be used for manual transportation of magnetic tape cartridges between the library and the computer facility. By use of a staging rack made in accordance with the invention, the tray 10 can also store the magnetic tape cartridges for selective dispensing thereof at the computer facility.

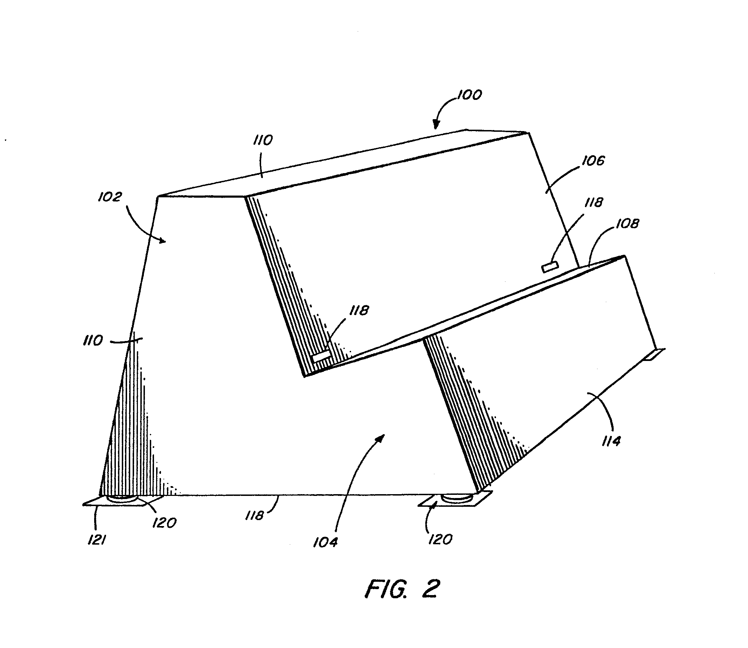

Fig. 2 shows a staging rack 100 for supporting tray 10. Being of a generally "L" shaped cross-section it comprises a generally vertically extending portion 102 and a generally horizontally extending portion 104. The vertically extending portion 102 includes a front bearing surface 106 while the horizontally extending portion includes a top bearing surface 108. These surfaces 106 and 108 support the tray 10 (not shown in this figure) in a desired orientation, as shall be further described below.

According to the preferred embodiment, the staging rack 100 is formed from aluminum sheets, although other materials and manner of construction are within the purview of this invention. It further includes opposing side panels 110, a top panel 112, and a lower front panel 114. The front bearing surface 106 is disposed and connected between the top panel 112 and the top bearing surface 108, which in turn slopes upwards towards and is connected at its other end to the lower front panel 114. The front bearing surface 106 is sloped toward the lower front panel 114.

Near the bottom of front bearing surface 106 are holes 118 sized, configured, and spaced apart so as each to be able to receive therein one cf the feet 30 of tray 10. As shown the holes 118 are at a rectangular cross-section. On bottom 119 of the staging rack 100 is means 120 for attaching it to a surface (not shown in this figure). The attaching means can comprise, for example, pairs of velcro interlocking fabric pads 121, 122, one of which is glued to the bottom 119 while the other is to be glued to the surface (not shown in this view) on which the staging rack 100 is to be placed. Proper positioning of the pads on the surface can be facilitated by means of a template 132 as shown in Fig. 3A. The template 132 includes holes 134 through which the pads can be glued to the surface. Other forms of attachment of the staging rack are also possible, such as screws or adhesive.

Fig. 3 depicts the staging rack 100 in use. The staging rack 100 supports the tray 10 while it is itself disposed on a support surface such as the top 123 of an electronic cabinet 124 for data processing equipment, such as drives (not shown). Control panels 126 are also shown as disposed on the top 124. The tray 10 in this figure holds a full complement of magnetic tape cartridges 128.

As can be appreciated by reference to both Fig. 2 and 3, the tray 10 is supported at a height above the top 123 sufficient to allow a user to access the tray's contents without being overly impeded by obstructions such as the control panels 126. Also, and importantly, the magnetic tape cartridges recline within the tray 10 on the staging rack 100. They are maintained at an inclination relative to the horizontal which facilitates their access. The preferred angle of presentation, is approximately $100^{\circ}$ to $120^{\circ}$. The tray 10 rests in the staging rack 100 with the bottom 20 bearing against the front bearing wall 106 and one of walls 16 or 18 bearing against the top bearing wall 108. The relative slopes and widths of these surfaces dictate the angle of presentation, as does, of course, the configuration of the compartments with regard to the cartridges contained within.

As pointed out above, the invention contemplates a more positive hold by the staging rack 100 of the tray 10 than mere gravity. Referring jointly to Figs. 1, 2 and 3, the feet 30 are held within the holes 118. If desired this can be a clearance fit. Otherwise, it can be an interference fit between each of the feet 30 and the respective hole 118. Alternatively, since two holes 118 are preferred to receive two of the feet 30 along either wall 16 or 18, selection of the distance between the holes 48 relative to the distance between the feet 30 can result in an interference fit when the pair of feet 30 are placed in the pair of holes. Thus the pair of feet 30 can be configured and disposed so as to clamp the portion of the front bearing surface 106 between the holes 118.

The tray 10 and staging rack 100 can have appropriate surfaces textured to reduce the likelihood that the tray will slip from the staging rack. Of course the slope of the surfaces and the placement of the center of gravity in the design further reduces the propensity for the assembly to slip apart. It should be appreciated that the magnetic tape cartridges in the tray 10 on the staging rack 100 at the prescribed angle of presentation have their sides displayed to users. Along these edges can be placed labels 130 for easy identification of the magnetic tape cartridges.

So far a system for storing, transporting and dispensing magnetic tape cartridges has been described. But manual transportation of individual trays can have its limitations.

A mobile truck or cart 200 is often desirable to transport in gang fashion many trays 10 at once. Fig. 4 shows a suitable design for such a mobile truck 200. It includes a support structure or superstructure 201 having casters 203 journaled to the bottom thereof. The casters 203 are of a conventional design as is the nature of their assembly to the truck 200. A handle 205 is also attached to the support structure 201. The truck 200 includes a recessed top 204 around which the sides 206 form vertically raised perimeter. This defines a trough or bucket 208 into which one or more trays 10 can be placed, each resting in the recessed top 204. On one or more sides 206 the truck 200 has recesses 210 each sized and configured to receive one of the trays 10. The sides 206 having the recesses 210 are inclined toward the center of the truck 200 near the top 204. As a result this permits the handles 28 and the lower wall 16 or 18 of the trays 10 to bear with the weight of the tray 10 and its contents against the adjacent sides 206 and thereby maintain the trays in a convenient position for both loading/unloading of the trays 10 and dispensing of magnetic tape cartridges 128 from the truck 200. The gripping portion 46 of the tray handle 28 with its cutout 52 facilitates loading and unloading of trays 10 from the truck 200.

Note that the inclination of the sides 206 containing the recesses 210 provides an angle of presentation of the side mounted trays which should also be approximately $100^{\circ}$ to $120^{\circ}$ from the horizontal. Alternative designs of the truck 200, for example, with a box-like rather than pyramid geometry are also within the purview of this invention, though it is desirable to maintain this angle of presentation.

The trays 10 loaded onto the recessed top 204 can be stacked one on top of another, if desired. The truck's design allows complete cartridge visibility, when the trays 10 are not stacked, and also evenly distributes the weight for easy and safe handling.

In use, the system for storing, transporting and dispensing magnetic tape cartridges made in accordance with the present invention is highly suited to the demands of a computer facility. A user can selectively obtain cartridges from a library in which they are stored and load them into a tray which is hand-transported or carried by a mobile truck. For example, twenty cartridges can be carried per tray and the mobile truck can accommodate up to 10 trays without resorting to stacking. The cartridges can thus be transported to the computer area for processing utilizing the staging rack if desired or by simply parking the mobile truck conveniently close to the data processing equipment. When processing is completed, the magnetic tape cartridges can be returned to the library.

While the preferred embodiment of this invention has been described, various modifications to the tray, staging rack and mobile truck are within the scope of the invention.

For example, the feet of the tray can have side surfaces of a saw-tooth configuration to positively grip the staging rack when the tray is placed thereon. Other latching features can also be incorporated. However, the design of the tray and staging rack as described herein does not require the tray to be fixedly attached to the staging rack.

CLAIMS

1. A system for storing, transporting and dispensing magnetic tape cartridges, comprising:

(A) an open-topped, four walled tray, having a plurality of integrally formed handles.

(B) a staging rack having a contoured surface adapted and configured to support said tray in a preselected position to promote dispensing of any contents in said tray, said tray having latch means, and said staging rack having catch means for cooperating with said latch means for positioning said tray on said staging rack.

2. The system of claim 1 wherein said latch means and said catch means cooperate to releasably secure said tray to said storage rack.

3. The system of claim 1 wherein said staging rack has a generally "L" shaped cross-section and is of a one-piece construction.

4. The system of claim 1 wherein the latch means serves as feet when the tray is placed on a generally flat, horizontal surface.

5. A system for storing, transporting and dispensing magnetic tape cartridges, comprising:

(A) a receptacle having generally parallel, spaced first walls and second walls, said first walls being general orthogonal to and connecting said secured walls at their respective ends; a bottom connected between said first and second walls, a spacer extending between said first walls and disposed generally in spaced parallel relation to said second walls so as to form and define two channels each adapted and configured for the receipt and storage of a plurality of cartridges, and handles formed integrally with at least one of said first walls or second walls. (B) a staging rack for supporting said receptacle, said rack being of a generally "L" shaped cross-section, comprising a first generally vertically extending portion, and a second generally horizontally extending portion connected together at one of their respective ends, said vertically extending portion having a front bearing wall and said horizontally extending portion having a top bearing wall, said bearing walls disposed and inclined so as to support said receptacle with one of said second walls of said receptacle resting on said top bearing surface and said bottom of said receptacle resting on said front bearing wall, such that an angle of presentation of said receptacle of approximately $100^\circ$ to $120^\circ$ (relative to the horizontal) is maintained while said receptacle is being supported, whereby said receptacle is disposed for selective dispensing of its contents.

6. The system of claim 5 further comprising a mobile truck including a support structure, casters mounted on said support structure to permit rolling movement thereof, handle means to enable manual maneuvering of and locomotion of said truck, said structure having at least one opening along at least one of its generally vertically extending surfaces for the receipt with a sliding fit of a receptacle, said receptacle's handles and said one of said second walls bearing against said support structure to support said receptacle therein, said support structure having a recessed top so as to receive at least one receptacle thereon and partially within said structure, with said at least one receptacle resting on its bottom.

7. The system of claim 6 wherein said receptacle further includes a plurality of inwardly projecting, generally vertically extending divider means disposed along said second walls thereof for separating and maintaining in separation tape cartridges placed within said receptacle, a plurality of ribs inwardly projecting and generally vertically extending along said first walls thereof, and a plurality of feet, each comprising a downwardly projecting element connected to said bottom of the receptacle, said ribs and said feet disposed and configured to coact as lateral and transverse stops to promote stackability of said receptacle.

8. The system of claim 7 wherein said ribs are configured and disposed such that, when a second receptacle of like design is placed atop said receptacle, said ribs contact the bottom of said second receptacle and support said second receptacle in a stacked relation to said receptacle.

9. The system of claim 5 wherein said staging rack further includes means for attachment thereof to a support surface.

10. The system of claim 9 wherein said attachment means includes at least one pad, and said support surface includes a like number of pads, said pads of said staging rack and of said support surface adapted and configured to interlock one with the other.

11. The system of claim 9 further including template means for positioning said pads of said support surface.

FIG. 1

FIG. IA

FIG. IB

FIG. 2

FIG. 3A

FIG. 3

FIG. 4

**European Patent Office**

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| A | EP-A-0 138 576 (IBM) <br> * page 1, line 5 - page 2, line 17; figures 1-7 * | 1,2 | G 11 B 23/023 |
| | --- | | |
| A | DE-A-3 218 118 (ELMEG) <br> * figure 1 * | 1 | |
| | --- | | |
| A | US-A-4 087 138 (W.P. McRAE) <br><br> * abstract, figures 1, 2 * | | |
| | --- | | |
| A | US-A-4 407 411 (A. LOWRY) <br><br> * abstract; figures 3, 4 * | | |
| | ----- | | |

|  |
|---|
| TECHNICAL FIELDS SEARCHED (Int. Cl.4) |
| G 11 B 23/00 <br> G 11 B 33/00 <br> B 65 D 85/30 |

The present search report has been drawn up for all claims

| Place of search | Date of completion of the search | Examiner |
|---|---|---|
| BERLIN | 22-09-1986 | ROGNONI M.G.L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82